# EUROPEAN PATENT SPECIFICATION

(11) **EP 4 170 842 B1**
(45) Date of publication and mention of the grant of the patent: **03.07.2024**
(21) Application number: 21825208.8
(22) Date of filing: 24.05.2021
(51) Int. Cl.: B60L 3/00, H02H 7/00, H02J 1/00

(54) **CONTROL DEVICE**
STEUERVORRICHTUNG
DISPOSITIF DE COMMANDE

(30) Priority: 17.06.2020 JP 2020104776
(43) Date of publication of application: 26.04.2023
(73) Proprietor: DENSO CORPORATION, Kariya-city, Aichi 448-8661 (JP)
(72) Inventor: TAKINAI, Shingo, Kariya-city, Aichi 448-8661 (JP)
(74) Representative: TBK
(86) International application number: PCT/JP2021/019670
(87) International publication number: WO 2021/256183

(56) References cited:
- JP-A- 2004 088 821
- JP-A- 2004 088 821
- JP-A- 2008 022 675
- JP-A- 2011 114 974
- US-A1- 2011 128 662

## Description

### [TECHNICAL FIELD]

The disclosure in the present specification relates to a control device which controls a switch placed between a battery and an electric device.

### [BACKGROUND]

As disclosed in PLT1, a power control device is known for controlling a main relay and a ground relay connected between a high-voltage battery and a motor, and a pre-charge relay connected in parallel to the main relay. An inrush limiting resistor is connected in series with the pre-charge relay to limit inrush current from the high-voltage battery to the motor.

### [PRIOR ART LITERATURE]

### [PATENT LITERATURE]

[PATENT LITERATURE 1] JP2011-114974A
Document US 2011/128662 A1 discloses power supply control apparatus for controlling a power supply unit including a battery and a load is provided. The power supply control apparatus includes a main relay and a ground relay, a pre-charge relay, an inrush current limiting resistor, a first relay control section, and a time measurement section. The main relay and the ground relay are connected between the battery and the load. The pre-charge relay is connected in parallel with one of the main relay and the ground relay. The inrush current limiting resistor is connected in series with the pre-charge relay, and limits an inrush current from the battery to the load. The first relay control section temporarily turns ON the pre-charge relay and turns ON the main relay and the ground relay upon receiving a power supply connection request from the outside, and turns OFF the main relay and the ground relay upon receiving a power supply interruption request from the outside. The time measurement section chooses a time point in the period from when the pre-charge relay is turned ON to when it is turned OFF, and measures the elapsed time from the chosen time point. Before the elapsed time measured by the time measurement section reaches a predetermined reference period, the first relay control section does not turn OFF the main relay and the ground relay, but maintains the relays ON, even when receiving the power supply interruption request.

Document JP 2004 088 821 A discloses power controller which requires no external timer. A relay control unit turns on relays in such a procedure as prevents an in-rush current by an inrush limit resistor, to power-connect a high voltage battery to a motor. A counter counts the number of times of power connections. A connection limit prohibits power connection action when a counter value of the counter reaches a prescribed value. A cooling time setting part sets heat release hours required for releasing the heat of the inrush limit resistor based on the duration time of power connection. A cooling time timer measures the elapsed time after ignition-off is inputted. A counter value correction part corrects a counter value according to the heat release hours when a heat release time comes, thus completing the power control action.

### [SUMMARY OF THE INVENTION]

The power control device disclosed in PLT1 turns on the ground relay and the pre-charge relay in response to a start instruction signal received from an ignition key switch operated by a user. After a predetermined time has passed, the power control device turns on the main relay. Then, the power control device turns off the pre-charge relay. At this time, the power control device begins to increment a counter value for cooling the limiting resistor.

The power control device determines whether or not a counter value for cooling the limiting resistor has reached a predetermined value in response to a stop instruction signal received from the ignition key switch operated by a user. If the counter value for cooling the limiting resistor has not reached the predetermined value, the power control device continues to turn on the main relay and the ground relay. If the counter value for cooling the limiting resistor reaches the predetermined value, the power control device turns off the main relay and the ground relay.

Such control keeps the pre-charge relay OFF until the counter value for cooling the limiting resistor reaches the predetermined value. Therefore, it is possible to ensure a sufficient time period for cooling the inrush limiting resistor heated by energization. It is possible to suppress an excessive temperature rise of the inrush limiting resistor

### (limiting resistor.)

However, in the case of such control, if the counter value for cooling the limiting resistor does not reach the predetermined value at the stop instruction signal is output from the ignition key switch by the user's operation, the main relay and the ground relay must be turned on after the user's operation. There may be a time difference between the timing of the user's operation and the timing of a disconnecting sound generated at turning the main relay and the ground relay off. As a result, the user may feel uncomfortable.

It is an object of the present disclosure to provide a control device which reduces an opportunity of a user feeling uncomfortable and suppresses an excessive temperature rise of the limiting resistor.

According to one aspect of the present disclosure, there is provided a control device as defined in claim 1.

Further aspects and features of the present invention are set out in the dependent claims

According to the present disclosure, it is possible to reduce a frequency of occurrence of generating a time difference between an operation timing for switching the trigger signal from the first level to the second level due to a user's operation and a generation timing of the disconnecting sound. Therefore, it is possible to reduce an opportunity of the user feeling uncomfortable. Also, an excessive temperature rise of the limiting resistor is suppressed.

### [BRIEF DESCRIPTION OF DRAWINGS]

FIG. 1 is a circuit diagram illustrating an in-vehicle system;
FIG. 2 is a flowchart for explaining a cooling process according to a first embodiment;
FIG. 3 is a timing diagram for explaining the cooling process;
FIG. 4 is a flowchart for explaining adding processing;
FIG. 5 is a timing diagram for explaining the cooling process according to a second embodiment; and
FIG. 6 is a flowchart for explaining the cooling process according to a third embodiment.

### [DETAILED DESCRIPTION]

The following describe embodiments for carrying out the present disclosure with reference to the drawings. In each embodiment, parts corresponding to the elements described in the preceding embodiments are denoted by the same reference numerals, and redundant explanation may be omitted. When only a part of the configuration is described in each embodiment, another embodiment described previously may be applied to the other parts of the configuration.

When, in each embodiment, it is specifically described that combination of parts is possible, the parts can be combined. In a case where any obstacle does not especially occur in combining the parts of the respective embodiments, it is possible to partially combine the embodiments, the embodiment and the modification, or the modifications even when it is not explicitly described that combination is possible.

### (First Embodiment)

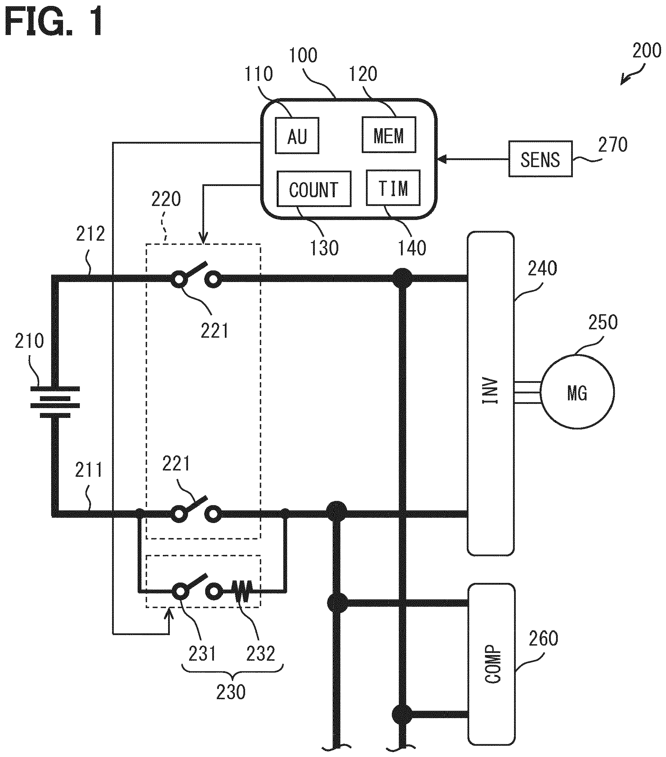

A power supply system 200 including a control device 100 is described with reference to FIGS. 1 to 3. The power supply system 200 is mounted on an electrically driven vehicle such as a hybrid automobile or an electric automobile. Note that the control device 100 can be applied not only to vehicles but also to mobile objects such as drones and robots, and various electrical products such as home appliances. The control device 100 can be appropriately employed in the power supply system 200 for these various electrical products.

### <In-vehicle System>

As shown in FIG. 1, the power supply system 200 has a battery 210, an SMR 220, a pre-charge circuit 230, a power conversion device 240, a motor 250, an electric load 260 and a sensor section 270 in addition to the control device 100. The SMR is an abbreviation for System Main Relay.

In the drawings, for simplification of notation, the power conversion device 240 is indicated by INV, the motor 250 is indicated by MG, the electric load 260 is indicated by COMP, and the sensor section 270 is indicated by SENS. The power conversion device 240 and the electric load 260 correspond to electric devices.

The control device 100 controls the energization and the de-energization of a switch in the power supply system 200 based on signals input from the sensor section 270 or a sensor (not shown) and communication result with a different in-vehicle control device.

The battery 210 includes multiple battery cells that are electrically connected in series. As this battery cell, for example, a secondary battery such as a lithium ion battery can be used. A negative electrode of a battery cell having a lowest potential among the multiple battery cells electrically connected in series is connected to a N bus bar 211. A positive electrode of a battery cell having a highest potential is connected to a P bus bar 212. Each of the N busbar 211 and the P busbar 212 is electrically connected to the power conversion device 240 and the electric load 260. The N busbar 211 and the P busbar 212 correspond to a power line.

The SMR 220 includes a main switch 221 placed on each of the N busbar 211 and the P busbar 212. The main switch 221 is a normally closed type electromagnetic relay. The main switch 221 is in an ON state if an exciting current is not supplied, and is in an OFF state if the exciting current is supplied. In the drawings, the ON state is indicated as ON, and the OFF state is indicated as OFF.

The main switch 221 is placed between the battery 210 in each of the N busbar 211 and the P busbar 212 and the electric power conversion device 240 (electric load 260). Therefore, if the main switch 221 is in the ON state due to the no-supply of the exciting current, the battery 210 is electrically connected to each of the electric power conversion device 240 and the electric load 260. If the main switch 221 is in the OFF state due to the supply of the exciting current, the battery 210 is not electrically connected to each of the electric power conversion device 240 and the electric load 260.

The pre-charge circuit 230 includes a charging switch 231 and a limiting resistor 232. The charging switch 231 and the charging resistor 232 are electrically connected in series to form a series circuit. One end of this series circuit is connected between the main switch 221 and the battery 210 in the N busbar 211. The other end of the series circuit is connected between the main switch 221 in the N busbar 211 and the electric power conversion device 240 (electric load 260). Thereby, the charging switch 231 and the charging resistor 232 are connected to the main switch 221 placed on the N busbar 211 in parallel. The pre-charge circuit 230 corresponds to the charging circuit.

The electric power conversion device 240 includes a smoothing capacitor having a large capacity and an electric power conversion circuit. One of two electrodes of the smoothing capacitor is connected to the N busbar 211. The other of the two electrodes is connected to the P busbar 212.

The smoothing capacitor is used in a charged state at the time of using the electric power conversion circuit. The smoothing capacitor is charged by the electric power supply from the battery 210. This electric power supply is performed by turning the main switch 221 placed on the P busbar 212 and the charging switch 231 of the pre-charge circuit 230 to the ON state and turning the main switch 221 placed on the N busbar 211 to the OFF state. By such a switch control, the electric power is supplied from the battery 210 to the smoothing capacitor via the charging resistor 232. A rapid increase in electric power flowing from the battery 210 to the smoothing capacitor is prevented.

The electric power conversion circuit includes an inverter circuit. The inverter circuit includes at least three phase circuits connected in parallel between the N busbar 211 and the P busbar 212. The phase circuit includes two switching elements connected in series and freewheeling diodes connected in reverse and parallel to each of these two switching elements.

The motor 250 is used for traveling of the electric vehicle. A stator coil including the motor 250 is electrically connected to a midpoint between the two switches of the phase circuit. In the ON state of the main switch 221, the switch elements provided in each phase circuit are PWM-controlled. Thereby, a three-phase alternating current is generated in the electric power conversion circuit. This three-phase alternating current is supplied to the stator coil, and a three-phased rotating magnetic field is generated from the stator coil. An interaction between this three-phase rotating magnetic field and a magnetic field generated from a rotor of the motor 250 generates a rotational torque in the rotor. Thereby, the motor 250 works as a power motoring work state. The electric vehicle becomes movable state.

Further, if the motor 250 is a power regenerative work by using rotational energy of the driving wheels of the electric vehicle, for example, the switch element is controlled to be in the OFF state. In such a manner, an AC power generated by the power regenerative work flows through the freewheeling diode. The freewheeling diode converts the AC power to a DC power. This DC power is supplied to the battery 210 or the electric load 260. The electric power conversion circuit may include a converter circuit which changes a voltage level of the input electric power.

A configuration in which battery 210 includes a fuel cell may also be adopted. In this configuration, power generated by the power regenerative work is not used to charge the battery 210.

The electric load 260 include a DC-DC converter and vehicle accessories. The DC-DC converter steps down the supplied DC power to 12V, and supplies the DC power to a speaker, a power window, a power steering device, and the like. The vehicle accessories may include, for example, a heater, an air conditioner, or the like, and driven by the supplied DC power.

These electrical loads 260 contain capacitive components. These capacitive components are charged when the electrical load 260 is used. These capacitive components are charged by power supply through the pre-charge circuit 230 described above.

In addition, as described above, the electric load 260 includes various devices. These devices are selectively used according to vehicle conditions. Therefore, a capacitance of the capacitive component of the electric load 260 changes according to the vehicle state. As a result, an amount of power supplied to the capacitive component via the pre-charge circuit 230 changes according to the vehicle state.

The sensor section 270 functions to detect various vehicle states. A part of sensors included in the sensor section 270 detect, for example, the voltage across the smoothing capacitor and the current flowing through it. Detection results of these sensors are input to the control device 100.

### <Control Devise>

The control device 100 controls the energization and the de-energization of a switch in the power supply system 200 based on signals input from the sensor section 270 or a sensor (not shown) and communication result with a different in-vehicle control device described above.

The control device 100 turns each of the main switch 221 placed on the P busbar 212 and the charging switch 231 of the pre-charge circuit 230 to the ON state. Further, the control device 100 turns the main switch 221 placed on the N busbar 211 to the OFF state. In such a manner, the control device 100 charges the smoothing capacitor in the electric power conversion device 240. The control device 100 also charges a capacitive component included in an electric load 260.

The control device 100 turns the main switch 221 placed on each of the N busbar 211 and the P busbar 212 to the ON state. Further, the control device 100 turns the charging switch 231 to the OFF state. In such a manner, the control device 100 electrically connects the battery 210 to the electric power conversion device 240 and the electric load 260.

The control device 100 controls the switch element in the electric power conversion device 240 by the pulse width modulation while tuning the main switch 221 to the ON state. In such a manner, the control device 100 drives the motor 250 in the power motoring work. Further, for example, the control device 100 turns the switch element to the OFF state. In such a manner, the control device 100 converts the AC power generated by the motor 250 into the DC power. Note, the PWM control for the power conversion device 240 may be performed by another in-vehicle control device.

### <Temperature Rise of Limiting Resistor>

If the charging switch 231 is turned to the ON state as described above, current flows through the limiting resistor 232. As a result, a temperature of the limiting resistor 232 is increased. This temperature rising of the limiting resistor 232 stops if the charging switch 231 is turned to the OFF state. The limiting resistor 232 begins to cool naturally and to decrease the temperature. The longer a natural cooling time period, the closer the temperature of the limiting resistor 232 to an environmental temperature.

However, if the charging switch 231 is repeatedly switched between the ON state and the OFF state without ensuring sufficient natural cooling time period, the limiting resistor 232 may be kept at a high temperature. As a result, problems may occur in the limiting resistor 232 itself and the wiring connected to the limiting resistor 232.

### <Cooling Control>

The control device 100 executes a cooling process, which is described later, in order to prevent such a problem from occurring. The control device 100 has, as components for executing this cooling process, an arithmetic unit 110, a memory 120, a counter 130, and a timer 140 shown in FIG. 1. In the drawing, the arithmetic unit 110 is denoted by AU, the memory 120 is denoted by MEM, the counter 130 is denoted by COUNT, the timer 140 is denoted by TIM, and the threshold value is denoted by TH.

The arithmetic unit 110 includes a processor. The arithmetic unit 110 reads out programs and various information stored in the memory 120, and executes the cooling process based on signals input from an outside. In parallel with the cooling process, the arithmetic unit 110 samples signals input from the sensor section 270 and various sensors at predetermined intervals. The arithmetic unit 110 stores the sampled or calculated information in the memory 120.

In the following, in order to avoid complicated description, various sensor signals sampled by the control device 100 are collectively referred to as a sensor signal. This sensor signal includes a trigger signal which becomes a high level in a use period by a user and a low level in a no-use period. A high level corresponds to a first level, and a low level corresponds to a second level.

The memory 120 is a non-transitional substantive storage medium that non-temporarily stores data and programs which can be read by a computer or a processor. The memory 120 includes a volatile memory and a non-volatile memory.

The memory 120 stores a cooling flag, a threshold value, and a cooling time period in addition to the above programs. The cooling flag can be rewritten to "0" and "1" by the arithmetic unit 110. The threshold value and the cooling time period are fixed values set in advance by experiments, simulations, or the like.

The threshold value is an integer greater than or equal to 1. The cooling time period is a value of several minutes. The threshold value is set to 2 in this embodiment. The cooling time period is set to 1 minute. Each of the threshold value and the cooling time period is associated with a predetermined value that determines a temperature condition of the limiting resistor.

The counter 130 has a value which is incremented or decremented by the arithmetic unit 110. The value of counter 130 indicates a temperature state of the limiting resistor 232. A higher value of the counter 130 indicates a higher temperature of the limiting resistor 232. Hereinafter, the value of the counter 130 is referred to as a counter value as required.

The timer 140 is controlled by the arithmetic unit 110 to start and stop time measurement and to clear a measured time. The measured time by the timer 140 indicates the natural cooling time period of the limiting resistor 232. A longer measured time indicates that the limiting resistor 232 is naturally cooled.

### <Flowchart>

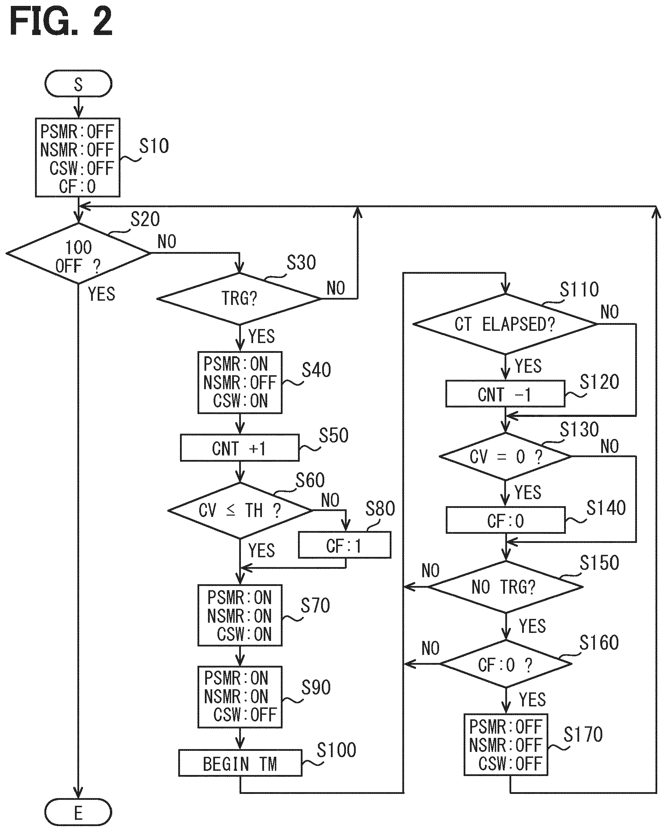

A cooling control is described below based on the flow chart of FIG. 2. This cooling control includes a normal process and a holding process. In FIG. 2, a start is referred to as "S", and an end is referred to as "E". The main switch 221 provided in the P busbar 212 is denoted as PSMR, the main switch 221 provided in the N busbar 211 is denoted as NSMR, and the charging switch 231 is denoted as CSW. The counter value is denoted by CV, the threshold value is denoted by TH, and the cooling flag is denoted by CF.

A step S10 shown in FIG. 2 shows an initial state of the power supply system 200. In the step S10, the main switch 221 and the charging switch 231 provided in each of the N busbar 211 and the P busbar 212 are driven in the OFF state (OFF state). The cooling flag is "0".

A step S20 following the step S10 indicates whether the control device 100 is in an OFF state or an ON state. If the control device 100 is in the OFF state, the control device 100 naturally does not perform any control. Therefore, processing of the control device 100 is finished. If the control device 100 is in an ON state, the control device 100 substantially starts processing for a cooling control from a step S30.

In the step S30, the arithmetic unit 110 of the control device 100 determines whether or not the trigger signal is input. Specifically, the trigger signal is a signal that indicates the ON/OFF state of an ignition switch by a user's key operation or the insertion/removal state of a charging connector of an external power supply. If the trigger signal is not input, the arithmetic unit 110 enters into a standby state in which the steps S20 and S30 are repeated. If the trigger signal has been input, the arithmetic unit 110 proceeds to a step S40.

Note, inputting the trigger signal shows that the trigger signal is at the high level. No inputting of the trigger signal shows that the trigger signal is at the low level. Therefore, the timing at which the trigger signal is input to the arithmetic unit 110 corresponds to an input timing of a rising edge of the trigger signal. The timing at which the trigger signal is no longer input to the arithmetic unit 110 corresponds to an input timing of a falling edge of the trigger signal.

The arithmetic unit 110 turns the main switch 221 provided in the P busbar 212 and the charge switch 231 of the pre-charge circuit 230 to the ON state (ON state), respectively, if it proceeds to the step S40. The arithmetic unit 110 holds the main switch 221 provided in the N busbar 211 in the OFF state. Then, the arithmetic unit 110 proceeds to a step S50. Such switch control supplies power to the smoothing capacitor and the capacitive component via the limiting resistor 232. This power supply raises a temperature of the limiting resistor 232.

The arithmetic unit 110 increments the counter value by "+1", if it proceeds to the step S50. Then, the arithmetic unit 110 proceeds to a step S60.

The arithmetic unit 110 compares the counter value and the threshold value, if it proceeds to the step S60. If the counter value is equal to or less than the threshold value, the arithmetic unit 110 proceeds to a step S70. If the counter value is greater than the threshold value, the arithmetic unit 110 proceeds to the step S70 via a step S80. The arithmetic unit 110 sets the cooling flag to "1", if it proceeds to the step S80.

The arithmetic unit 110 assumes that the power supply to the smoothing capacitor and the capacitive component has ended, and turns the main switch 221 and the charging switch 231 provided in the N busbar 211 and the P busbar 212, respectively, to the ON states, if it proceeds to the step S70. After this process, the arithmetic unit 110 proceeds to a step S90.

Note, the arithmetic unit 110 may perform a process of determining termination of power supply to the smoothing capacitor and the capacitive component based on the sensor signal between the steps S40 and S70 described above. Alternatively, the arithmetic unit 110 may be in a standby state only for a time period during which power supply is expected to end.

The arithmetic unit 110 turns the charging switch 231 to the OFF state while keeping the main switch 221 provided in the N busbar 211 and the P busbar 212 in the ON state, if it proceeds to the step S90. After this process, the arithmetic unit 110 proceeds to a step S100. By switching the charging switch 231 from the ON state to the OFF state, the limiting resistor 232 begins to be cooled naturally.

The arithmetic unit 110 uses the timer 140 to start time measurement, if it proceeds to the step S100. As a result, the timer 140 measures a time period during which the charging switch 231 remains in the OFF state (continuous time period). The timer 140 measures time for naturally cooling the limiting resistor 232 (natural cooling time period). After this process, the arithmetic unit 110 proceeds to a step S110.

The arithmetic unit 110 compares the cooling time period stored in the memory 120 with a measured time by the timer 140, if it proceeds to the step S110. If the measured time is greater than the cooling time period, the arithmetic unit 110 proceeds to a step S120. If the measured time is not greater than the cooling time period, the arithmetic unit 110 proceeds to a step S130.

The arithmetic unit 110 decrements the counter value by "-1", if it proceeds to the step S120. Then, the arithmetic unit 110 proceeds to a step S130.

The arithmetic unit 110 determines whether or not the counter value is "0", if it proceeds to the step S130. If the counter value is "0", the arithmetic unit 110 proceeds to a step S140. If the counter value is not "0", the arithmetic unit 110 proceeds to a step S150.

Note, the arithmetic unit 110 may determine whether or not the counter value is a predetermined value lower than the threshold value in the step S130. In the case of this embodiment, since the threshold value is "2", the predetermined value may be "0" or "1".

The arithmetic unit 110 sets the cooling flag to "0", if it proceeds to the step S140. Then, the arithmetic unit 110 proceeds to the step S150.

The arithmetic unit 110 determines whether or not the input of the trigger signal has interrupted, if it proceeds to the step S150. If the input of the trigger signal is interrupted, the arithmetic unit 110 proceeds to a step S160. If the trigger signal has been input, the arithmetic unit 110 returns to the step S110.

In order to perform such control, as long as the trigger signal continues to be input, the arithmetic unit 110 continues to loop the processing from the step S110 to the step S150. In this loop process, the measured time by the timer 140 becomes longer, and if the measured time exceeds the cooling time period, the counter value is decremented. The counter value is gradually decremented each time the measured time exceeds the cooling time period. If the counter value becomes "0", the cooling flag becomes "0".

The arithmetic unit 110 determines whether the cooling flag is "0" or not, if it proceeds to the step S160. The arithmetic unit 110 proceeds to a step S170, if the cooling flag is "0". If the cooling flag is "1", the arithmetic unit 110 returns to the step S110.

In order to perform such control, even if the trigger signal is interrupted, as long as the cooling flag is "1", the arithmetic unit 110 continues to loop the processing from the step S110 to the step S160. That is, for example, even if the trigger signal becomes a no-input due to a user' s operation, the arithmetic unit 110 keeps the main switch 221 provided in the N busbar 211 and the P busbar 212 in the ON state and the charging switch 231 in the OFF state.

Thereby, the natural cooling of the limiting resistor 232 is continued, and the power supply from the battery 210 to the power conversion device 240 and the electric load 260 is continued. A reduction in capacitance of each of the smoothing capacitor and the capacitive component is suppressed.

Note, if the trigger signal is input again due to the user' s operation while the arithmetic unit 110 is performing the loop processing from the step S110 to the step S160, the arithmetic unit 110 shifts to the loop processing from the step S110 to the step S150.

The arithmetic unit 110 proceeds to the step S170, if the input of the trigger signal is interrupted and the cooling flag is "0". The arithmetic unit 110 turns the main switch 221 provided in the N busbar 211 and the P busbar 212 into the OFF state, if it proceeds to the step S170. After this process, the arithmetic unit 110 returns to the step S20.

### <Timing Diagram>

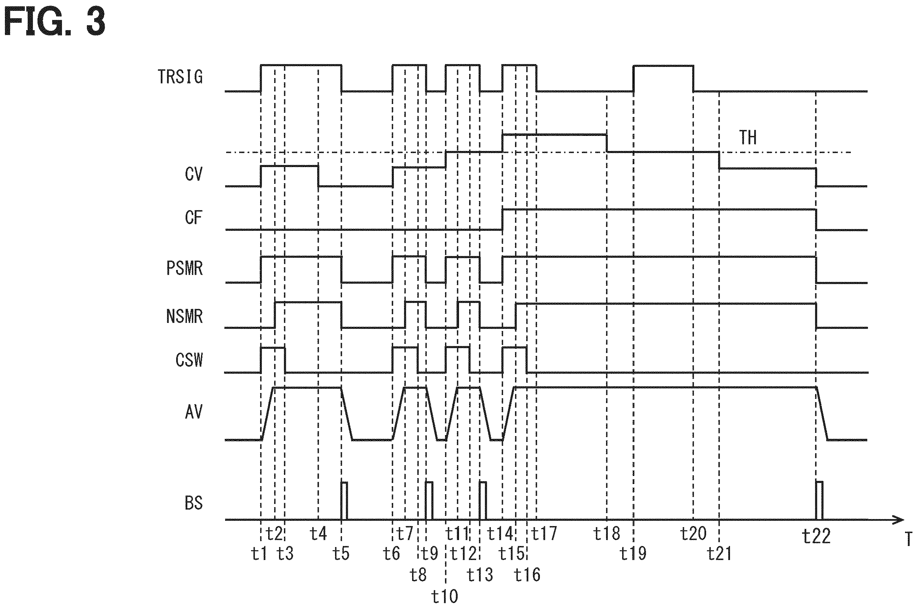

Next, the cooling process is described based on the timing diagram of FIG. 3. In an order from the top, the drawing shows the trigger signal, the counter value, the cooling flag, the main switch 221 provided in the P busbar 212, the main switch 221 provided in the N busbar 211, and the charge switch 231. Next, it shows respective changes over time of an applied voltage for the power conversion device 240 and the electric load 260, and the disconnecting sound generated when the main switch 221 switches from the ON state to the OFF state.

In FIG. 3, the trigger signal is denoted by TRSIG, the counter value is denoted by CV, and the cooling flag is denoted by CF. The main switch 221 provided in the P busbar 212 is denoted as PSMR, the main switch 221 provided in the N busbar 211 is denoted as NSMR, and the charging switch 231 is denoted as CSW. A applied voltage is denoted by AV, a disconnecting sound is denoted by BS, and time is denoted by T. Also, the threshold value is denoted by TH.

Before the time t1 shown in FIG. 3, the trigger signal is not inputted yet, the counter value is "0", the cooling flag is "0", and the main switch 221 and the charging switch 231 are in the OFF states. Therefore, the applied voltage is "0" and the disconnecting sound is not generated. State before the time t1 is similar to an initial state of the power supply system 200 in the step S10 shown in FIG. 2.

At time t1, for example, when if the ignition switch is switched from the OFF state to the ON state by the user's operation, a trigger signal is input to the control device 100. In response to the input of this trigger signal, the control device 100 switches the main switch 221 and the charging switch 231 provided in the P busbar 212 to the ON state. The controller 100 then increments the counter value by "+1". At this time, the temperature of the limiting resistor 232 begins to rise.

A power supply begins to the smoothing capacitor and the capacitive component by switch control at time t1. Both the smoothing capacitor and the capacitive component begin to be charged. As a result, the voltage applied to the power conversion device 240 and the electric load 260 begins to rise.

At time t2, the applied voltage stops rising. This indicates that the charging of the smoothing capacitor and capacitive component has been completed. The control device 100 determines a completion of charging based on the input of the sensor signal. Note, the control device 100 may determine the completion of charging based on an elapse of time period expected to complete charging. If this determination is made, the control device 100 turns the main switch 221 provided on the N busbar 211 to the ON state while keeping the main switch 221 and the charging switch 231 provided on the P busbar 212 in the ON state.

At time t3, the control device 100 turns the charging switch 231 to the OFF state and starts time measurement. At this time, the temperature rising of the limiting resistor 232 stops, and natural cooling starts.

If it is time t4 elapsed a time period of the cooling time period from time t3, the control device 100 decrements the counter value by "-1".

At time t5, the ignition switch is switched from the OFF state to the ON state by the user's operation. As a result, the trigger signal input to the control device 100 is terminated. At this time, the cooling flag is "0". Therefore, the control device 100 switches the main switch 221 from the energized state to the OFF state. At this time, a disconnecting sound is generated. If the ignition switch is switched from the ON state to the OFF state by the user's operation in this manner, the disconnecting sound is generated.

At time t6, the trigger signal is input to the control device 100. Therefore, the control device 100 turns the main switch 221 and the charging switch 231 provided in the P busbar 212 to the ON state, and increments the counter value by "+1". By such control, the smoothing capacitor and the capacitive component begin to be charged. As the temperature of the limiting resistor 232 begins to rise, the applied voltage begins to rise.

If an increase of the applied voltage is completed at time t7, the control device 100 turns the main switch 221 provided in the N busbar 211 to the ON state while keeping the main switch 221 and the charging switch 231 provided in the P busbar 212 in the ON state.

At time t8, the control device 100 turns the charging switch 231 to the OFF state and starts time measurement.

At time t9 before the cooling time period elapses from time t8, the trigger signal input to the control device 100 is terminated. At this time, the counter value is "1", but the cooling flag is "0". Therefore, the control device 100 switches the main switch 221 to the OFF state. In this case as well, if the ignition switch is switched from the ON state to the OFF state by the user's operation, the disconnecting sound is generated.

At time t10 before the cooling time period elapses from time t8, the trigger signal is input to the control device 100 again. The control device 100 turns the main switch 221 and the charging switch 231 provided in the P busbar 212 to the ON state, and increments the counter value by "+1". This brings the counter value to a total of "2".

If it reaches time t11, the control device 100 turns the main switch 221 provided in the N busbar 211 to the ON state while keeping the main switch 221 and the charging switch 231 provided in the P busbar 212 in the ON state.

At time t12, the control device 100 turns the charging switch 231 to the OFF state and starts time measurement.

At time t13 before the cooling time period elapses from time t11, the trigger signal input to the control device 100 is terminated. At this time, the counter value is "2", but the cooling flag is "0". Therefore, the control device 100 switches the main switch 221 to the OFF state. At this time, a disconnecting sound is generated.

At time t14 before the cooling time period elapses from time t11, the trigger signal is input to the control device 100 again. The control device 100 turns the main switch 221 and the charging switch 231 provided in the P busbar 212 to the ON state, and increments the counter value by "+1". This brings the counter value to a total of "3". At this time, the control device 100 determines that the counter value exceeds the threshold value. The control device 100 changes the cooling flag from "0" to "1".

If it reaches time t15, the control device 100 turns the main switch 221 provided in the N busbar 211 to the ON state while keeping the main switch 221 and the charging switch 231 provided in the P busbar 212 in the ON state.

At time t16, the control device 100 turns the charging switch 231 to the OFF state and starts time measurement.

At time t17 before the cooling time period elapses from time t16, the trigger signal input to the control device 100 is terminated. At this time, the counter value is "3" and the cooling flag is "1". Therefore, the control device 100 holds the ON state of the main switch 221 and the OFF state of the charging switch 231.

If it is time t18 elapsed a time period of the cooling time period from time t16, the control device 100 decrements the counter value by "-1". As a result, the counter value becomes "2". Since the counter value is not "0" at this time, the control device 100 keeps the cooling flag at "1". The control device 100 holds the ON state of the main switch 221 and the OFF state of the charging switch 231.

A trigger signal is input to the control device 100 at time t19 before the cooling time period elapses from time t18 at which the counter value is decremented. At this time, the control device 100 holds the ON state of the main switch 221 and the OFF state of the charging switch 231. Therefore, the natural cooling of the limiting resistor 232 is continued.

At time t20, the trigger signal input to the control device 100 is terminated. At this time, the counter value is "2" and the cooling flag is "1". Therefore, the control device 100 holds the ON state of the main switch 221 and the OFF state of the charging switch 231. No disconnecting sound is generated.

If it is time t21 elapsed a time period of the cooling time period from time t18, the control device 100 decrements the counter value by "-1". As a result, the counter value becomes "1 ". Since the counter value is not "0" at this time, the control device 100 keeps the cooling flag at "1". The control device 100 holds the ON state of the main switch 221 and the OFF state of the charging switch 231.

If it is time t22 elapsed a time period of the cooling time period from time t21, the control device 100 decrements the counter value by "-1". As a result, the counter value becomes "0". The control device 100 changes the cooling flag from "1" to "0". Therefore, the control device 100 switches the main switch 221 from the ON state to the OFF state. At time t17 when the user's operation ends and time t22 after time t20, a disconnecting sound is generated.

### <Operation and Advantage>

As described above, the counter value is incremented if the charging switch 231 is turned to the ON state and current flows through the limiting resistor 232. If the charging switch 231 is turned to the OFF state and the natural cooling time period of the limiting resistor 232 exceeds the cooling time period, the counter value is decremented.

Therefore, in a short period of time in which the natural cooling time period of the limiting resistor 232 does not exceed the cooling time period, if the input and the no-input of the trigger signal occur due to the user's operation, and the charging switch 231 is repeatedly switched between the ON state and the OFF state, the counter value is gradually incremented. Thereby, the counter value increases and the difference between the counter value and the threshold value is decreased.

However, the cooling flag is "0" as long as the counter value is not greater than the threshold value. In this case, the main switch 221 is switched from the ON state to the OFF state at a timing when the trigger signal is switched from the input to the no-input due to the user' s operation. The timing of the user's operation and the timing of generation of the disconnecting sound due to the change from the ON state to the OFF state of the main switch 221 are observed at the same time.

The cooling flag becomes "1" as the counter value becomes greater than the threshold value. In this case, the main switch 221 is held in the ON state. In this case, the main switch 221 is not switched from the ON state to the OFF state at a timing when the trigger signal is switched from the input to the no-input due to the user' s operation. The timing of the user's operation and the timing of generation of the disconnecting sound are not observed at the same time.

According to the present disclosure, it is possible to reduce a frequency of occurrence of a shift in time between an operation timing for switching the trigger signal from the input to the no-input due to the user' s operation and a generation timing of the disconnecting sound. Therefore, it is possible to reduce an opportunity of the user feeling uncomfortable.

Further, if the cooling flag becomes "1", the charging switch 231 is held in the OFF state. As a result, it is suppressed that the current flowing through the limiting resistor 232 in a short period of time is repeated more times than the threshold value. Also, an excessive temperature rising of the limiting resistor 232 is suppressed.

Until the cooling flag changes from "1" to "0", the ON state of the main switch 221 and the OFF state of the charge switch 231 are held. It takes a time period for a plurality of the cooling time periods until the cooling flag is changed from "1" to "0".

During such a long period of time, the OFF state of the charging switch 231 is held. During this time, the limiting resistor 232 is naturally cooled. This suppresses the occurrence of problems in the limiting resistor 232 due to temperature rise.

After such a long period of time, if the trigger signal is not input, the main switch 221 is turned from the ON state to the OFF state. For example, in the example shown in FIG. 3, the disconnecting sound is generated at time t22 after the user turns the ignition switch to the OFF state by operating the key switch at time t20. The user may be separated from the vehicle during a time period from time t20 to time t22. In this way, although the timing of the user's operation and the timing of generation of the disconnecting sound are not observed at the same time, a possibility of the user perceiving the disconnecting sound is reduced. As a result, it is possible to reduce an opportunity of the user feeling uncomfortable.

### (Second Embodiment)

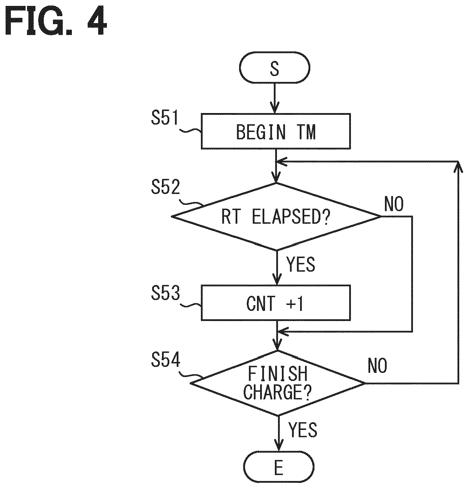

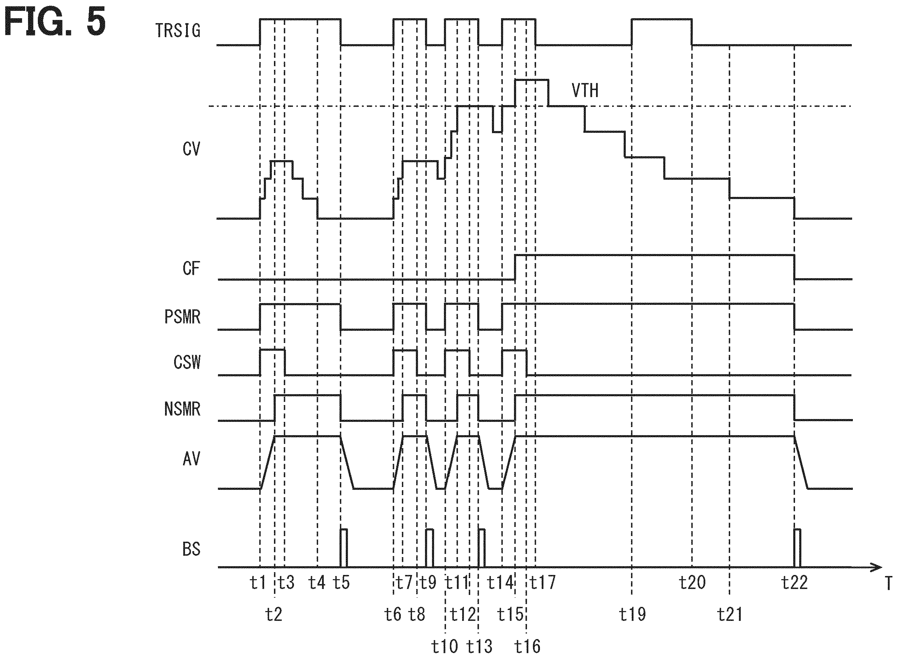

A second embodiment is described with reference to FIG. 4 and FIG. 5.

The first embodiment illustrated an example in which the control device 100 performs the step S60 after the step S50 shown in FIG. 2 in the cooling process. Contrary, the control device 100 of this embodiment performs an adding process shown in FIG. 4 after the step S50 in the cooling process.

The arithmetic unit 110 of the control device 100 proceeds to a step S51 shown in FIG. 4, after the processing of the step S50 shown in FIG. 2.

The arithmetic unit 110 uses the timer 140 to start time measurement, if it proceeds to the step S51. Thereby, the timer 140 measures a temperature rising time period of the limiting resistor 232 by an energization. After this process, the arithmetic unit 110 proceeds to a step S52.

The arithmetic unit 110 compares the temperature rising time period stored in the memory 120 with a measured time by the timer 140, if it proceeds to the step S52. If the measured time is greater than the temperature rising time period, the arithmetic unit 110 proceeds to a step S53. If the measured time is not greater than the temperature rising time period, the arithmetic unit 110 proceeds to a step S54.

The arithmetic unit 110 increments the counter value by "+1", if it proceeds to the step S53. Then, the arithmetic unit 110 proceeds to the step S54.

The arithmetic unit 110 determines, based on the sensor signal, whether charging of the smoothing capacitor and the capacitive component has been completed, if it proceeds to the step S54. If charging is completed, the arithmetic unit 110 proceeds to the step S60 shown in FIG. 2. If the charging has not been completed, the arithmetic unit 110 returns to the step S52. The arithmetic unit 110 loops through the steps S52 to S54.

As described in the first embodiment, various devices included in the electric load 260 are selectively used according to vehicle conditions. Therefore, a capacitance of the capacitive component of the electric load 260 changes according to the vehicle state. Therefore, a time period required for the arithmetic unit 110 to execute the loop processing of the steps S52 to S54 changes according to the vehicle state.

During this loop processing, the charging switch 231 is in the ON state. As a result, a current pass through the limiting resistor 232, and the temperature of the limiting resistor 232 continues to rise. As the loop processing time increases, the temperature of the limiting resistor 232 rises. The counter value increases accordingly.

Therefore, as shown in the timing diagram of FIG. 5, once the charging switch 231 is turned to the ON state, not only the counter value is incremented by "+1", but also the counter value is gradually incremented in accordance with a length of a time period in which the charging switch 231 is in the ON state.

In the example shown in FIG. 5, the counter value is incremented by "+3" between a time period from time t1 when the trigger signal is input and the charging switch 231 is turned to the ON state to time t3 when a charging operation to the capacitive component of the smoothing capacitor is completed and the charging switch 231 is turned to the OFF state. The threshold value in this embodiment is set to "5". Therefore, the cooling flag remains "0".

From time t3 to time t4, the control device 100 gradually decrements the counter value. At time t4, the total counter value becomes "0".

If the trigger signal is input to the control device 100 at time t6, the control device 100 turns the main switch 221 and the charging switch 231 provided in the P busbar 212 to the ON state. The control device 100 keeps the charging switch 231 in the ON state until time t8. During this time, the counter value is incremented by "+3".

At time t8, the control device 100 turns the charging switch 231 to the OFF state. From time t8 to time t10, the control device 100 decrements the counter value by "-1". This brings the counter value to a total of "+2".

If the trigger signal is input again to the control device 100 at time t10, the control device 100 turns the main switch 221 and the charging switch 231 provided in the P busbar 212 to the ON state. The control device 100 keeps the charging switch 231 in the ON state until time t12. During this time, the counter value is incremented by "+3". This brings the counter value to a total of "+5".

At time t12, the control device 100 turns the charging switch 231 to the OFF state. From time t12 to time t14, the control device 100 decrements the counter value by "-1". The counter value becomes a total of "+4".

If the trigger signal is input further to the control device 100 at time t14, the control device 100 turns the main switch 221 and the charging switch 231 provided in the P busbar 212 to the ON state. The control device 100 keeps the charging switch 231 in the ON state until time t16. During this time, the counter value is incremented by "+2". This brings the counter value to a total of "+6". At this time, the control device 100 determines that the counter value exceeds the threshold value. The control device 100 changes the cooling flag from "0" to "1".

Thereafter, the control device 100 keeps the cooling flag at "1" until the counter value reaches "0". At the same time, the control device 100 holds the ON state of the main switch 221 and the OFF state of the charging switch 231.

As described above, not only the counter value is incremented if the charging switch 231 turns from the OFF state to the ON state, but the counter value is incremented according to the energization time of the charging switch 231. The energization time of the charging switch 231 has a correlation with the temperature rise of the limiting resistor 232. Therefore, the temperature rise state of the limiting resistor 232 is reflected by the counter value.

Based on whether or not this counter value exceeds the threshold value, it is determined whether or not to hold the charging switch 231 in the OFF state. Therefore, an accuracy of a state control of the charging switch 231 according to the temperature rise state of the limiting resistor 232 is improved. This effectively suppresses excessive temperature rise of the limiting resistor 232.

Therefore, the control device 100 described in the present embodiment includes the similar configuration elements to that of the control device 100 described in the first embodiment. Therefore, the control device 100 of the present embodiment provides the similar operation effect to that of the control device 100 described in the first embodiment. The same applies to other embodiments and modifications described below. Therefore, description thereof is omitted.

### (Third Embodiment)

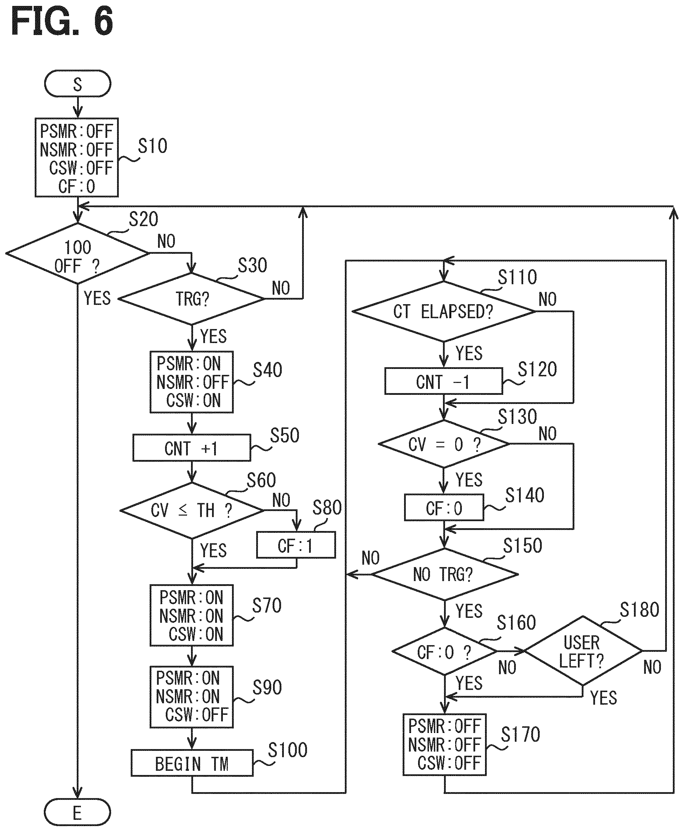

Next, a third embodiment is described with reference to FIG. 6.

In the first embodiment, it shows an example in which the control device 100 returns to the step S110 if the step S160 is NO in FIG. 2. On the other hand, as shown in FIG. 6, the control device 100 of this embodiment proceeds to a step S180 in the case of NO in the step S160.

The arithmetic unit 110 determines whether or not the user has separated away from the vehicle based on the sensor signal, if it proceeds to the step S180. The arithmetic unit 110 proceeds to the step S170, if the user is separated away from the vehicle. Then, the arithmetic unit 110 turns the main switch 221 to the OFF state in the step S170. If the user is staying in the vehicle, the arithmetic unit 110 returns to the step S110.

Thus, the arithmetic unit 110 turns the main switch 221 to the OFF state if the user has separated from the vehicle. This reduces power consumption for controlling the main switch 221.

Sensors for determining whether or not the user has separated away from the vehicle include a door sensor that indicates whether a door is open or closed, a seat belt sensor that indicates whether a seat belt is attached or detached, and the like. These various sensors are included in the sensor section 270. The output of these various sensors is included in the sensor signal. The outputs of these various sensors correspond to separation signals.

In the example of FIG. 6, if the step S160 is NO, the step S180 is executed. However, the step S180 may be executed, e.g., after the step S140 or the step S150.

### (First Modification)

In each embodiment, an example in which the pre-charge circuit 230 is connected in parallel to the main switch 221 provided in the N busbar 211 is shown. However, a configuration in which the pre-charge circuit 230 is connected in parallel to the main switch 221 provided in the P busbar 212 may also be adopted. A configuration in which the pre-charge circuit 230 is connected in parallel to each of the main switch 221 provided in the N busbar 211 and the main switch 221 provided in the P busbar 212 may also be adopted.

If the pre-charge circuit 230 is connected in parallel to the main switch 221 provided in each of the N busbar 211 and the P busbar 212, only the charging switch 231 may be turned to the ON state when charging the smoothing capacitor and the capacitive component. After the charging of the smoothing capacitor and the capacitive component is completed, the main switch 221 may be turned to the ON state and the charging switch 231 may be turned to the OFF state.

### (Second Modification)

Each embodiment illustrated an example in which the threshold value and the cooling time period were fixed values. The second embodiment illustrated an example in which the temperature rising time period was a fixed value. However, these threshold values, cooling time periods, and temperature rising time period may be variable values determined based on sensor signals. For example, the threshold value may be set larger as the external ambient temperature detected by the sensor signal is lowered. The cooling time period may be shortened as the external atmosphere temperature is lowered. The temperature rising time period may be extended as the external atmosphere temperature is lowered.

Each of the embodiments illustrated an example in which the main switch 221 was a normally closed electromagnetic relay which is in the ON state if no excitation current is supplied, and is in the OFF state if an excitation current is supplied. However, as the main switch 221, a normally open electromagnetic relay which is in the ON state if an excitation current is supplied and is in the OFF state if an excitation current is not supplied may be employed.

### <Configuration of Control Device>

The control device 100 of each embodiment may be referred to as an ECU (Electronic Control Unit). The control device 100 or the control system may be provided by (a) a plurality of logics called if-then-else formats or (b) learned models tuned by machine learning. The learned models tuned by machine learning is provided by an algorithm as a neural network, for example.

The control device 100 is provided by a control system including at least one computer. The control system may include multiple computers linked by a data communication device. The computer includes at least one processor (hardware processor) that is hardware. The hardware processor can be provided by the following (i), (ii), or (iii).

(i) The hardware processor may be at least one processor core that executes a program stored in at least one memory. In this case, the computer is provided with at least one memory and at least one processor core. The processor core is called a CPU, GPU, RISC-CPU, or the like. The CPU is an abbreviation for Central Processing Unit. The GPU is an abbreviation for Graphics Processing Unit. The memory is also referred to as a storage medium. The memory is a non-transitory and tangible storage medium non-temporarily storing "at least one a program and data" readable by a processor. The storage medium may be a semiconductor memory, a magnetic disk, an optical disk, or the like. The program may be distributed as a single unit or as a storage medium in which the program is stored.
(ii) The hardware processor may be a hardware logic circuit. In this case, the computer is provided by a digital circuit including a number of programmed logic units (gate circuits). The Digital circuit may be also referred to as a logic circuit array such as ASIC, FPGA, PGA, CPLD or the like. ASIC stands for Application Specific Integrated Circuit. The FPGA is an abbreviation for Field Programmable Gate Array. The PGA is an abbreviation for Programmable Gate Array. The CPLD is an abbreviation for Complex Programmable Logic Device. The digital circuit may comprise a memory for storing programs and/or data. The computer may be provided by an analog circuit. A computer may be provided by a combination of a digital circuit and an analog circuit.
(iii) The hardware processor may be a combination of the above (i) and the above (ii). (i) and (ii) are placed on different chips or on a common chip. In these cases, the part (ii) is also called an accelerator.

The control device100, a signal source(s), and a control object(s) provide various elements. At least some of these elements may be referred to as blocks, modules, or sections. Furthermore, elements included in the control system are referred to as functional means only when intentional.

The control unit 100 and a method thereof described in this disclosure may be realized by a dedicated computer provided by configuring a processor and a memory programmed to execute one or multiple functions embodied by a computer program. Alternatively, the control device 100 described in the present disclosure and the method thereof may be implemented by a dedicated computer configured as a processor with one or more dedicated hardware logic circuits. Alternatively, the control unit 100 and the method thereof described in this disclosure may be realized by one or more dedicated computers configured by a combination of a processor and a memory programmed to execute one or multiple functions, and a processor configured by one or more hardware logic circuits. The computer program may be stored in a computer-readable non-transition tangible recording medium as an instruction executed by a computer.

### <Contents Included>

While the present disclosure has been described with reference to the embodiments thereof, it is to be understood that the disclosure is not limited to the embodiments and constructions. The present disclosure is intended to cover various modification and equivalent arrangements within the scope of the claims.

In addition, while the various elements are shown in various combinations and configurations, which are exemplary, other combinations and configurations, including more, less or only a single element, are also within the scope of the present disclosure as long as they are within the scope of the claims.

## Claims

1. A control device (100) for a power supply system (200) of a vehicle, the power supply system includes:
a battery (210);
an electrical device (240, 260) connected to the battery (210) via a plurality of power lines (211, 212);
a plurality of main switches (221) which are provided in each of the plurality of power lines and controls energization and de-energization of current between the battery (210) and the electrical device (240, 260);
a sensor unit (270) which outputs a trigger signal becoming a first level in a use period by a user, in which an ignition key switch is in an ON state or a charging connector is in an insertion state, and a second level in a no-use period, in which the ignition key switch is in an OFF state or the charging connector is in a removal state; and
a pre-charge circuit (230) which includes a charging switch (231) and a limiting resistor (232) connected in series, and is connected in parallel to at least one of the plurality of main switches (221), wherein:
the control device (100) is configured to perform:
a normal process, if a temperature of the limiting resistor is lower than a predetermined value, which turns the charging switch (231) to an ON state and, when a predetermined condition is met, to an OFF state and turns the plurality of main switches (221) to the ON state when the trigger signal is changed from the second level to the first level, and turns the plurality of main switches (221) to the OFF state from the ON state when the trigger signal is changed from the first level to the second level; and
a holding process, if the temperature of the limiting resistor is higher than the predetermined value, which holds the plurality of main switches (221) in the ON state and the charging switch (231) in the OFF state, regardless of the trigger signal, further comprising:
a timer (140) for measuring a time period;
a memory (120) in which a cooling time period and a threshold value associated with the predetermined value are stored;
a counter (130) which is configured to increment a counter value when the charging switch (231) is turned from the OFF state to the ON state and decrements the counter value when a continuous time period of the OFF state of the charging switch (231) has elapsed after the charging switch (231) is turned from the ON state to the OFF state; and
an arithmetic unit (110) which is configured to perform the normal process if the counter value does not exceed the threshold value, and perform the holding process if the counter value exceeds the threshold value, **characterized in that**
the control device (100) for the power supply system is mounted on a vehicle, and wherein
the sensor unit (270) is configured to output a separation signal indicating whether or not the user has separated from the vehicle in addition to the trigger signal, and wherein
the arithmetic unit (110) is configured to turn the plurality of main switches (221) to the OFF state if it determines that the user has separated from the vehicle based on the separation signal while the holding process is being executed.

2. The control device (100) according to claim 1, wherein
the arithmetic unit (110) is configured to hold the plurality of main switches (221) in the ON state and the charging switch (231) in the OFF state, regardless of the trigger signal, until the counter value reaches a predetermined value lower than the threshold value after the counter value exceeds the threshold value.

3. The control device (100) according to claim 1 or 2, wherein
the memory (120) is configured to store a temperature rising time period in addition to the cooling time period and the threshold value, and wherein
the counter (130) is configured to increment the counter value if the charging switch (231) is switched from the OFF state to the ON state, and increment the counter value at every time that a time period of the ON state of the charging switch (231) elapses a temperature rising time period.

## Patentansprüche

1. Steuerungseinrichtung (100) für ein Leistungsversorgungssystem (200) eines Fahrzeugs, wobei das Leistungsversorgungssystem umfasst:
eine Batterie (210);
eine elektrische Einrichtung (240, 260), die mit der Batterie (210) über eine Vielzahl von Leistungsleitungen (211, 212) verbunden ist;
eine Vielzahl von Hauptschaltern (221), die in jeder der Vielzahl von Leistungsleitungen bereitgestellt sind und das Einschalten und Ausschalten des Stroms zwischen der Batterie (210) und der elektrischen Einrichtung (240, 260) steuern;
eine Sensoreinheit (270), die ein Triggersignal ausgibt, das in einer Benutzungsperiode durch einen Benutzer, in der sich ein Zündschalter in einem EIN-Zustand oder ein Ladeverbinder in einem Einsteckzustand befindet, einen ersten Pegel annimmt, und in einer Nichtbenutzungsperiode, in der sich der Zündschalter in einem AUS-Zustand oder der Ladeverbinder in einem entfernten Zustand befindet, einen zweiten Pegel annimmt; und
eine Vor-Ladeschaltung (230), die einen Ladeschalter (231) und einen Begrenzungswiderstand (232) umfasst, die in Reihe geschaltet sind, und die parallel zu mindestens einem der mehreren Hauptschalter (221) geschaltet ist, wobei:
die Steuervorrichtung (100) dazu konfiguriert ist, um auszuführen:
einen normalen Prozess, wenn eine Temperatur des Begrenzungswiderstands niedriger als ein vorbestimmter Wert ist, der den Ladeschalter (231) in einen EIN-Zustand und, wenn eine vorbestimmte Bedingung erfüllt ist, in einen AUS-Zustand schaltet und die Vielzahl von Hauptschaltern (221) in den EIN-Zustand schaltet, wenn das Triggersignal von dem zweiten Pegel zu dem ersten Pegel geändert wird, und die Vielzahl von Hauptschaltern (221) von dem EIN-Zustand in den AUS-Zustand schaltet, wenn das Triggersignal von dem ersten Pegel zu dem zweiten Pegel geändert wird; und
einen Halteprozess, wenn die Temperatur des Begrenzungswiderstandes höher als der vorbestimmte Wert ist, der die Vielzahl von Hauptschaltern (221) in dem EIN-Zustand und den Ladeschalter (231) in dem AUS-Zustand hält, unabhängig von dem Triggersignal, weiterhin mit:
einem Zeitgeber (140) zum Messen einer Zeitspanne;
einem Speicher (120), in dem eine Kühlzeitperiode und ein mit dem vorbestimmten Wert verbundener Schwellenwert gespeichert sind;
einem Zähler (130), der so konfiguriert ist, dass er einen Zählerwert erhöht, wenn der Ladeschalter (231) von dem AUS-Zustand in den EIN-Zustand geschaltet wird, und den Zählerwert verringert, wenn eine kontinuierliche Zeitperiode des AUS-Zustands des Ladeschalters (231) abgelaufen ist, nachdem der Ladeschalter (231) von dem EIN-Zustand in den AUS-Zustand geschaltet wurde; und
einer Recheneinheit (110), die so konfiguriert ist, dass sie den normalen Prozess durchführt, wenn der Zählerwert den Schwellenwert nicht überschreitet, und den Halteprozess durchführt, wenn der Zählerwert den Schwellenwert überschreitet, **dadurch gekennzeichnet, dass**
die Steuereinrichtung (100) für das Leistungsversorgungssystem an einem Fahrzeug montiert ist, und wobei
die Sensoreinheit (270) derart konfiguriert ist, dass sie zusätzlich zu dem Auslösesignal ein Trennungssignal ausgibt, das angibt, ob der Benutzer sich von dem Fahrzeug getrennt hat oder nicht, und wobei
die Recheneinheit (110) derart konfiguriert ist, dass sie die Vielzahl von Hauptschaltern (221) in den AUS-Zustand schaltet, wenn bestimmt ist, dass der Benutzer sich von dem Fahrzeug getrennt hat, basierend auf dem Trennungssignal, während der Halteprozess ausgeführt wird.

2. Steuerungseinrichtung (100) gemäß Anspruch 1, wobei
die Recheneinheit (110) derart konfiguriert ist, um die Vielzahl von Hauptschaltern (221) in dem EIN-Zustand und den Ladeschalter (231) in dem AUS-Zustand zu halten, unabhängig von dem Triggersignal, bis der Zählerwert einen vorbestimmten Wert erreicht, der niedriger als der Schwellenwert ist, nachdem der Zählerwert den Schwellenwert überschreitet.

3. Steuerungseinrichtung (100) gemäß Anspruch 1 oder 2, wobei
der Speicher (120) derart konfiguriert ist, um eine Temperaturanstiegszeitspanne zusätzlich zu der Kühlzeitspanne und dem Schwellenwert zu speichern, und wobei
der Zähler (130) derart konfiguriert ist, um den Zählerwert zu erhöhen, wenn der Ladeschalter (231) vom AUS-Zustand in den EIN-Zustand geschaltet wird, und den Zählerwert jedes Mal zu erhöhen, wenn eine Zeitperiode des EIN-Zustands des Ladeschalters (231) für eine Temperaturanstiegszeitperiode andauert.

## Revendications

1. Dispositif de commande (100) pour un système d'alimentation électrique (200) d'un véhicule, le système d'alimentation électrique comportant :
une batterie (210) ;
un dispositif électrique (240, 260) connecté à la batterie (210) via une pluralité de lignes de puissance (211, 212) ;
une pluralité de commutateurs principaux (221) qui sont prévus dans chacune de la pluralité de lignes de puissance et commandent l'alimentation et la coupure d'alimentation de courant entre la batterie (210) et le dispositif électrique (240, 260) ;
une unité capteur (270) qui délivre un signal de déclenchement devenant un premier niveau dans une période d'utilisation par un utilisateur, dans laquelle un commutateur de clé de contact est dans un état ACTIVÉ ou un connecteur de charge est dans un état d'insertion, et un deuxième niveau dans une période de non-utilisation, dans laquelle le commutateur de clé de contact est dans un état DÉSACTIVÉ ou le connecteur de charge est dans un état de retrait ; et
un circuit de pré-charge (230) qui comporte un commutateur de charge (231) et une résistance de limitation (232) connectée en série, et est connecté en parallèle à au moins un de la pluralité de commutateurs principaux (221),
le dispositif de commande (100) étant configuré pour réaliser :
un processus normal, si une température de la résistance de limitation est inférieure à une valeur prédéterminée, qui passe le commutateur de charge (231) dans un état ACTIVÉ et, lorsqu'une condition prédéterminée est remplie, dans un état DÉSACTIVÉ et passe la pluralité de commutateurs principaux (221) dans l'état ACTIVÉ lorsque le signal de déclenchement est changé du deuxième niveau au premier niveau, et passe la pluralité de commutateurs principaux (221) de l'état ACTIVÉ à l'état DÉSACTIVÉ lorsque le signal de déclenchement est changé du premier niveau au deuxième niveau ; et
un processus de maintien, si la température de la résistance de limitation est supérieure à la valeur prédéterminée, qui maintient la pluralité de commutateurs principaux (221) dans l'état ACTIVÉ et le commutateur de charge (231) dans l'état DÉSACTIVÉ, peu importe le signal de déclenchement, comprenant en outre :
un chronomètre (140) pour mesurer une période de temps ;
une mémoire (120) dans laquelle une période de refroidissement et une valeur seuil associées à la valeur prédéterminée sont stockées ;
un compteur (130) configuré pour incrémenter une valeur de compteur lorsque le commutateur de charge (231) est passé de l'état DÉSACTIVÉ à l'état ACTIVÉ et décrémenter la valeur de compteur lorsqu'une période de temps continue de l'état DÉSACTIVÉ du commutateur de charge (231) s'est écoulée après le passage du commutateur de charge (231) de l'état ACTIVÉ à l'état DÉSACTIVÉ ; et
une unité arithmétique (110) configurée pour réaliser le processus normal si la valeur de compteur ne dépasse pas la valeur seuil, et réaliser le processus de maintien si la valeur de compteur dépasse la valeur seuil, **caractérisé en ce que**
le dispositif de commande (100) pour le système d'alimentation électrique est monté sur un véhicule, et
l'unité capteur (270) étant configurée pour délivrer un signal de séparation indiquant si l'utilisateur s'est détaché ou non du véhicule en plus du signal de déclenchement, et
l'unité arithmétique (110) étant configurée pour passer la pluralité de commutateurs principaux (221) dans l'état DÉSACTIVÉ s'il est déterminé que l'utilisateur s'est détaché du véhicule sur la base du signal de séparation tandis que le processus de maintien est exécuté.

2. Dispositif de commande (100) selon la revendication 1,
l'unité arithmétique (110) étant configurée pour maintenir la pluralité de commutateurs principaux (221) dans l'état ACTIVÉ et le commutateur de charge (231) dans l'état DÉSACTIVÉ, peu importe le signal de déclenchement, jusqu'à ce que la valeur de compteur atteigne une valeur prédéterminée inférieure à la valeur seuil après le dépassement de la valeur seuil par la valeur de compteur.

3. Dispositif de commande (100) selon la revendication 1 ou 2,
la mémoire (120) étant configurée pour stocker une période de montée de température en plus de la période de refroidissement et de la valeur seuil, et
le compteur (130) étant configuré pour incrémenter la valeur de compteur si le commutateur de charge (231) est passé de l'état DÉSACTIVÉ à l'état ACTIVÉ et incrémenter la valeur de compteur à chaque fois qu'une période de temps de l'état ACTIVÉ du commutateur de charge (231) s'écoule jusqu'à une période de montée de température.
